Europäisches Patentamt

European Patent Office

Office européen des brevets

(19)

(11) EP 1 280 288 A1

(12) **EUROPEAN PATENT APPLICATION**

(43) Date of publication:
29.01.2003 Bulletin 2003/05

(51) Int Cl.7: **H04B 10/17**

(21) Application number: **01402051.5**

(22) Date of filing: **27.07.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **ALCATEL**
**75008 Paris (FR)**

(72) Inventors:
• **Courtois, Olivier**
**92160 Antony (FR)**

• **Bouder, Vincent**
**75013 Paris (FR)**
• **Lesterlin, Dominique**
**94400 Vitry sur Seine (FR)**

(74) Representative: **Colombo, Stefano Paolo et al**
**Alcatel,**
**Intellectual Property Department, Vimercate**
**Via Trento, 30**
**20059 Vimercate (MI) (IT)**

(54) **Method and system for automatic gain equalization in an optical transmission system using WDM technique**

(57) It is disclosed a method and system for automatic gain equalization in a WDM optical communication system, which provides for using Automatic Gain Equalizers (AGEs) to pre-tilt the spectrum and get both gain flattening and Optical Signal to Noise Ratio (OSNR) flattening: the AGEs are periodically inserted in the amplification chain, for pre-compensating the tilt that will accumulate down the line (pre-emphasis).

Optical Spectrum Monitors (OSM) are placed some amplifiers downstream, measure the OSNR and send this data back to the relating AGE. For each wavelength the difference between the OSNR and the minimal OSNR over the spectrum is computed and added to the previous attenuation at this wavelength. The new attenuation spectrum is normalized and is used to control the AGE.

FIG. 1

## Description

The invention relates to the field of optical communication technology. More particularly it relates to automatic gain equalization in a WDM optical transmission systems.

In recent years, optically amplified transmission systems have been developed, in which digital data are transmitted by performing optical amplification and optical relay or repeat using optical transmission fiber. Wavelength division multiplexing (WDM) is used for increasing the capacity of fiber optic networks. In systems using WDM transmission, plural optical signal channels are carried over a single line, each channel being assigned to a particular wavelength. Thereby gain equalization of long haul optical amplified transmissions becomes more and more difficult due to the increasing number of transmitted wavelengths.

The in-line optical amplification may be achieved by using optical amplifiers like erbium doped fiber amplifiers (EDFA). The optical amplifier gain is apt to recover the losses in the optical fiber sections.

To achieve the same transmission performance at all wavelengths in a WDM system, the Optical Signal to Noise Ratio (OSNR) must be uniform at the receiver's end at all wavelengths.

Optical power unbalance must also be limited to avoid large penalties due to non-linear effects in the fiber (Self Phase Modulation), and to remain compatible with the receiver's dynamic range. This is especially critical in Ultra Long Haul systems where the large number of amplifiers induces significant discrepancies between channel/wavelength performances.

In addition, due to the fiber attenuation variation and depending also on certain parameters during the manufacturing process, the actual loss of the manufactured fibers is somewhat different from the expected one. Therefore, the real gain of the optical amplifiers can be lower or higher than the expected one, thus inducing a linear tilt in dB versus wavelength. This tilt is negative or positive, depending on whether the actual optical amplifier gain is higher or lower than the nominal one.

Therefore gain flattening and OSNR flattening must be performed through the optical system sections, for all wavelengths.

Gain flattening is conventionally done with a static filter inside the Optical Amplifier, while OSNR flattening is done from the transmitter side by pre-emphasis technique, namely by attenuating some channels with respect to others.

These "static" techniques however are subject to a number of limitations:

- An amplifier's gain is tilted whenever the inter-stage losses or input power are modified;
- Pre-emphasis has a limited range of attenuation (typically 12 dB).

A particular device is known in the art as Automatic gain Equalizer (AGE) which carries out the function of a dynamically tunable filter or an array of attenuators, made in different technologies, like liquid cristal arrays, tunable acousto-optical filters on optical fiber, Fourier filters on silica waveguides.

Till now the AGE has been used to keep optical amplifiers output flat over a whole range of input powers, by the following procedure:

- using a spectral monitoring device;
- measuring the power difference between each channel and the channel with minimal power;
- adding half of this value to the attenuation at this wavelength; then normalizing the AGE so that the minimal attenuation is always zero (plus the insertion loss);
- running this procedure iteratively till convergence, usually in less than 10 iterations.

However the procedure for using the AGE described above could not be used to solve the above problems in the gain flattening and OSNR flattening, in fact it only flattens the output spectrum.

First, it does not work in conjunction with pre-emphasis (since after the AGE, all channels will have the same power), thus making OSNR imbalance a major problem.

Second, it doesn't reduce non-linear effects by much, unless using one AGE per amplifier, since the most amplified channels remain the same, thus they will be the ones that have the most power (if the sections lengths are equally distributed). In other words, power spectrum imbalance only gets worse.

Therefore in view of the known solutions, that are not quite efficient, an obiect of the invention is to provide an improved automatic gain equalization method and system for use in a WDM optical communication systems, which solves the above problems.

According to the invention a method for automatic gain equalization in a WDM optical communication system is provided.

The method provides for using AGEs to pre-tilt the spectrum and get both gain flattening and OSNR flattening: the AGEs are periodically inserted in the amplification chain, for pre-compensating the tilt that will accumulate down the line (pre-emphasis).

Thus power imbalance (the difference between the maximal and the minimal power value) can be limited to be compatible with the receiver's dynamic range (at the end of the amplifier chain) and non-linear effect limits, and the OSNR will be flat at the receiver.

The AGEs will be placed in between the optical amplifiers and relating Optical Spectrum Monitors (OSM) will be placed some amplifiers downstream.

The OSM will measure the OSNR and send this data back to the AGE.

For each wavelength the difference between the OSNR and the minimal OSNR over the spectrum will be computed and will be added to the previous attenuation at this wavelength.

Then the new attenuation spectrum will be normalized (we subtract the minimal attenuation to all wavelengths) and used to control the equalization curve of the AGE.

A system for automatic gain equalization in a WDM optical communication system is also provided.

This solution has the advantage to rely on technologies particularly feasible for terrestrial and submarine transmission.

Other advantages of such systems are:

• Simple algorithm;
• Priority on the OSNR, which is the main limiting factor for Ultra Long Haul design;
• Lift pre-emphasis limitations (12 dB attenuation);
• Limitation of non-linear effects which is one of the main limiting factors in ULH systems.

These and further objects are achieved by means of an apparatus and method as described in the attached claims, which are considered an integral part of the present description.

The invention will be described in detail in the following description of preferred embodiments with reference to the following figures, given by way of non-limiting example to illustrate the principles of the invention, wherein:

- FIG.1 is a a schematic view showing a preferred embodiment of a system for automatic gain equalization according to the present invention;
- FIG.2 is a graphical plot depicting the trend of the optical power vs. the channel and the amplifier chain for the system of fig. 1;
- FIGS. 3a and 3b show the trend of the attenuation vs. wavelength and/or channel along the system of fig. 1.

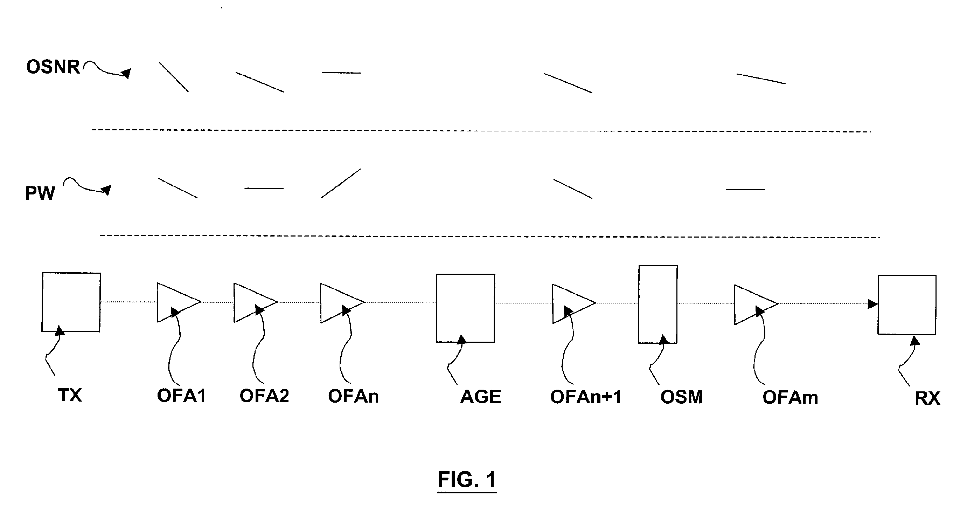

A preferred embodiment of the present invention is shown in FIG.1.

An optical transmitter TX and an optical receiver RX are placed at the two ends of an optical communication link using WDM technique, thereby plural optical signal channels are carried over a single link, each channel being assigned to a particular wavelength.

A number of optical fiber amplifiers OFA1, ... OFAn, ... OFAn+1, ... OFAm of a known type is placed in between the optical fiber spans, to recover the attenuation in the optical fibers. Normally the first amplifier of the chain has the function of an Optical Booster Amplifier and the last one that of an Optical Preamplifier.

A fixed linear gain flattening optical filter, not shown in the figure, is preferably built in the OFA amplifiers.

The optical amplifiers generally show a non linear trend of gain/attenuation and OSNR with the wavelength/channel.

A controllable automatic gain Equalizer AGE is placed between two optical amplifiers OFAn and OFAn+1. AGE carries out the function of a controllable dynamically tunable filter or an array of attenuators.

Some known kinds of AGE are available on the market, made in different technologies, like:

Liquid cristal arrays;
Fourier filters on silica waveguides;
Tunable Acousto-Optical filter on optical fiber, exploits the Bragg condition produced when acoustical waves are created in a refractive material in the direction of light propagation;
PLC waveguide filter/Mach-Zehnder (phase shifter MZI) based thermo-optic (TO), essentially a temperature-controlled Mach Zehnder waveguide interferometer;
Electronically switchable Bragg gratings, an holographic polymer-dispersed liquid crystal.

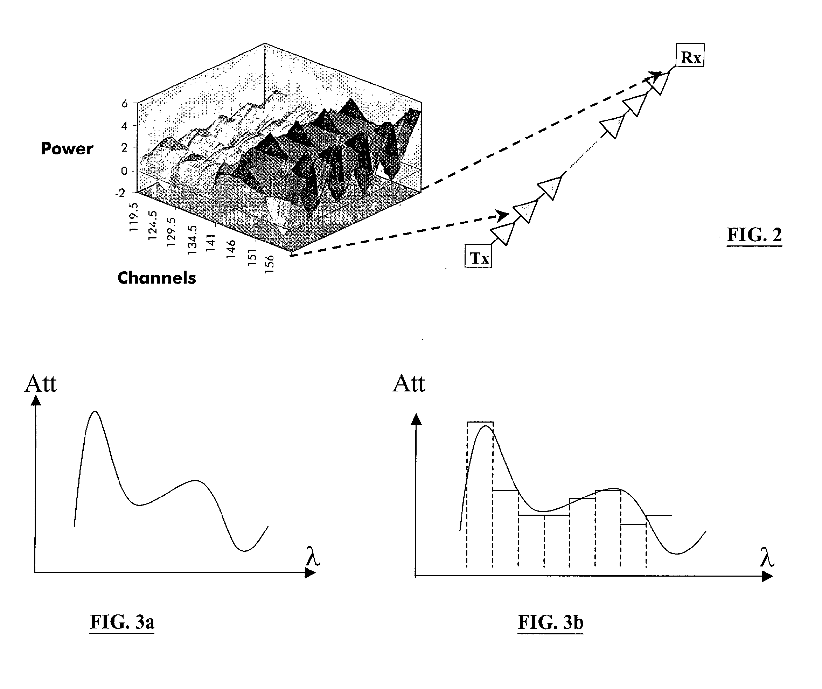

The AGE shows a very attractive characteristic, as from the plots in figures 3a and 3b, namely a controllable attenuation trend vs. wavelength and/or channel. It is possible to get a given whole band equalization for gain flattening (fig. 3a) or a channel equalization for individual channel control (fig. 3b).

A device performing the function of Optical Spectrum Monitor OSM is placed a number of OFAs downstream of the AGE, preferably 1 to 10 OFAs further, one OSM with each AGE.

The OSM measures the OSNR trend with wavelength, and sends this data back to the AGE under the form of wavelength and OSNR couples of value.

The OSM device is of a known type: for example it may be made by a tunable bragg filter and a photodiode, sweeping through the band; or it may also be made by a row of photodiodes with demultiplexing function.

The following formula will be calculated either at the system level (in the supervision apparatus not shown in the figure), or embedded in the AGE board, so as to control the equalization curve of the AGE:

$$\Delta OSNR(\lambda) = ONSR(\lambda) - OSNR_{min}$$

$$Att_{n+1}'(\lambda) = Att_n(\lambda) + \Delta OSNR(\lambda)$$

$$Att_{n+1}(\lambda) = Att_{n+1}'(\lambda) - Att_{n+1}^{min}$$

For each wavelength/channel $\lambda$ the difference between the measured $OSNR(\lambda)$ and the minimal $OSNR_{min}$ over the spectrum is computed and added to the previous attenuation $Att_n(\lambda)$ at this wavelength, obtain-

ing the new value $Att_{n+1}'(\lambda)$, where n is the iteration number.

Then the new attenuation value $Att_{n+1}'(\lambda)$ is normalized by subtracting the minimal attenuation $Att_{n+1}^{min}$ to all wavelengths/channels and fed to the AGE.

The iteration number n ranges from 1 to N, where N can be preset depending on the particular system requirements.

Accordingly the AGE modifies its equalization curve (figs. 3a, 3b) iteratively with n, till reaching substantial convergence at iteration N.

In fig. 1 there are also shown examples of trends of power PW and OSNR in the various OFAs of the chain.

Therefore the algorithm leads to a periodicity in the trend of the power spectrum.

A non limiting embodiment example is shown with reference to figure 2, where the trend is shown of the optical power vs. channels and amplifier chain. The periodicity is determined by the placement of the AGEs in the aplifier chain.

The system consists of 80 channels over 22 spans of 23 dB attenuation/gain per span, with Raman amplification used in conjunction with EFDA for the optical amplifiers. There is one AGE (with the related OSM) every 5 amplifiers.

The figure of one AGE every 5 amplifiers results from the following typical figures:

- 1 dB tilt/ripple per OFA amplifiers;
- 10 dB loss in the amplifier interstage;
- 10 dB dynamic range for the AGE.

So the formula determines how to use the device AGE; the position of it takes also into account the above factors:

- the gain tilt/ripple of the OFA amplifiers;
- the amplifier's tolerable interstage loss;
- the AGE's dynamic range;
- the tolerable gain excursion to avoid penalties in terms of non-linear effects and OSNR.

It allows a good averaging of the launched power and received OSNR between the channels. Simulations have shown that the optimal number of amplifiers per AGE varies from 3 to 6 depending on the amplifier and line configuration.

Further implementation details will not be described, as the man skilled in the art is able to carry out the invention starting from the teaching of the above description.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the spirit and scope of the invention are deemed to be covered by this invention.

**Claims**

1. A method for automatic gain equalization in a WDM optical communication link, the link comprising a number of optical fiber amplifiers (OFA1, ... OFAn, ... OFAn+1, ... OFAm) in between the optical fiber spans of the link,

   **characterized in that** it provides for periodically inserting a number of Automatic Gain Equalizers (AGEs) in the link to pre-tilt the spectrum and get both gain flattening and Optical Signal to Noise Ratio (OSNR) flattening, the said Automatic Gain Equalizers pre-compensating the tilt that will accumulate down the link, for all the channels/wavelengths of the WDM link.

2. A method as in claim 1, **characterized in that**:

   - at least one Optical Spectrum Monitor (OSM), placed a number of amplifiers downstream of a relating Automatic Gain Equalizer (AGE), measures the Optical Signal to Noise Ratio for all the channels/wavelengths of the WDM link, and sends this data back to the relating Automatic Gain Equalizer (AGE);
   - said Automatic Gain Equalizer (AGE) accordingly modifying the equalization curve at all the channels/wavelengths of the WDM link.

3. A method as in claim 2, **characterized in that** said Automatic Gain Equalizer (AGE) modifies the equalization curve iteratively according to the following steps:

   - calculating for each channel/wavelength the difference between the measured Optical Signal to Noise Ratio and a minimal Optical Signal to Noise Ratio over the spectrum;
   - adding said difference to the previous attenuation at every channel/wavelength, getting a new attenuation spectrum;.
   - normalizing the new attenuation spectrum by subtracting a minimal attenuation to all wavelengths, and
   - modifying the equalization curve according to the normalized attenuation spectrum.

4. A system for automatic gain equalization in a WDM optical communication link, the link comprising a number of optical fiber amplifiers (OFA1, ... OFAn, ... OFAn+1, ... OFAm) in between the optical fiber spans of the link,

   **characterized in that** it comprises a number of Automatic Gain Equalizers (AGEs), periodically inserted in the link in between said optical fiber amplifiers, to pre-tilt the spectrum and get both gain flattening and Optical Signal to Noise Ratio flattening, the said Automatic Gain Equalizers pre-compensating the tilt that will accumulate down the link, for all the channels/wavelengths of the WDM link.

5. A system as in claim 4, **characterized in that** it further comprises at least one Optical Spectrum Monitor (OSM) placed a number of amplifiers downstream of the Automatic Gain Equalizer (AGE); said Optical Spectrum Monitor measuring the Optical Signal to Noise Ratio for all the channels/wavelengths of the WDM link, and sending this data back to the Automatic Gain Equalizer; said Automatic Gain Equalizer (AGE) accordingly modifying the equalization curve at all the channels/wavelengths of the WDM link.

6. A system as in claim 5, **characterized in that** it comprises means for modifying the equalization curve of the Automatic Gain Equalizer (AGE) iteratively, said means:

   - calculating for each channel/wavelength the difference between the measured Optical Signal to Noise Ratio, received from the Optical Spectrum Monitor (OSM), and a minimal Optical Signal to Noise Ratio over the spectrum;
   - adding the said difference to the previous attenuation at every channel/wavelength, getting a new attenuation spectrum;.
   - normalizing the new attenuation spectrum by subtracting a minimal attenuation to all wavelengths, and
   - modifying the equalization curve of the Automatic Gain Equalizer (AGE) according to the normalized attenuation spectrum.

7. A system as in claim 4, **characterized in that** it comprises one Automatic Gain Equalizer (AGE) every 3 to 6 optical fiber amplifiers (OFA1, ... OFAn, ... OFAn+1, ... OFAm).

8. A system as in claim 5, **characterized in that** it comprises one Optical Spectrum Monitor (OSM) for every Automatic Gain Equalizer (AGE), placed a number of optical fiber amplifiers downstream of the Automatic Gain Equalizer (AGE) ranging from 1 to 10.

9. Optical communication system, comprising a system for automatic gain equalization according to any of claims from 4 to 8.

EP 1 280 288 A1

OSNR

PW

TX  OFA1  OFA2  OFAn  AGE  OFAn+1  OSM  OFAm  RX

FIG. 1

Power

Channels

119.5 124.5 129.5 134.5 141 146 151 156

Tx

Rx

FIG. 2

Att

λ

FIG. 3a

Att

λ

FIG. 3b

EP 1 280 288 A1

**European Patent Office**

## EUROPEAN SEARCH REPORT

Application Number

EP 01 40 2051

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>A | US 6 160 659 A (KINOSHITA SUSUMU)<br>12 December 2000 (2000-12-12)<br>* column 2, line 1 - line 35 *<br>* column 14, line 8 - column 15, line 24 *<br>* column 17, line 51 - column 18, line 16 *<br>* figures 18,19,23 * | 1,2,4,5,<br>8,9<br>3,6 | H04B10/17 |
| X | EP 0 944 190 A (FUJITSU LTD)<br>22 September 1999 (1999-09-22)<br>* paragraph '0036! *<br>* paragraph '0093! - paragraph '0096! *<br>* paragraph '0109! - paragraph '0117! *<br>* paragraph '0148! *<br>* figures 1,13,16 * | 1,2,4,5,<br>8,9 | |
| X | EP 0 794 599 A (FUJITSU LTD)<br>10 September 1997 (1997-09-10)<br>* page 2, line 18 - page 3, line 27 *<br>* page 10, line 10 - page 11, line 14 *<br>* figures 1,13,16-19 * | 1,2,4,5,<br>7-9 | |

TECHNICAL FIELDS SEARCHED (Int.Cl.7)

H04B

The present search report has been drawn up for all claims

| Place of search | Date of completion of the search | Examiner |
|---|---|---|
| THE HAGUE | 18 December 2001 | Carrasco Comes, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 01 40 2051

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2001

| Patent document cited in search report | | Publication date | Patent family member(s) | | Publication date |
|---|---|---|---|---|---|
| US 6160659 | A | 12-12-2000 | JP | 9159526 A | 20-06-1997 |
| | | | US | 5909305 A | 01-06-1999 |
| | | | US | 5818629 A | 06-10-1998 |
| EP 0944190 | A | 22-09-1999 | EP | 0944190 A2 | 22-09-1999 |
| | | | JP | 2000151515 A | 30-05-2000 |
| EP 0794599 | A | 10-09-1997 | JP | 9244079 A | 19-09-1997 |
| | | | EP | 0794599 A2 | 10-09-1997 |

EPO FORM P0459

For more details about this annex : see Official Journal of the European Patent Office, No. 12/82